# EUROPEAN PATENT APPLICATION

(11) **EP 0 982 266 A2**
(43) Date of publication of application: **01.03.2000**
(21) Application number: 99113703.5
(22) Date of filing: 13.07.1999
(51) Int. Cl.: C01B 3/38

(54) **Process for autothermal reforming of a hydrocarbon feedstock**

(30) Priority: 27.08.1998 DK 107698
(71) Applicant: Haldor Topsoe A/S, DK-2800 Lyngby (DK)
(72) Inventor: Christensen, Peter Seier, 2400 Copenhagen NV (DK); Christensen, Thomas Sandahl, 2800 Lyngby (DK); Primdahl, Ivar Ivarsen, 2400 Copenhagen (DK); Hansen, Jens-Henrik Bak, 2800 Lyngby (DK)

(57) **Abstract**

Process for the preparation of a hydrogen and carbonmonoxid rich gas by catalytic autothermal reforming including the step of partial oxidation of a hydrocarbon feedstock with an oxygen containing reactant stream in presence of steam, wherein the steam is present in the hydrocarbon feedstock in an amount higher than in the oxygen containing reactant stream.

## Description

The present invention is directed to soot free autothermal reforming (ATR) of hydrocarbon feed.

In autothermal reforming, combustion of hydrocarbon feed is carried out with substoichiometric amounts of oxygen by flame reactions in a burner combustion zone and, subsequently, steam reforming of the partially combusted feedstock in a fixed bed of steam reforming catalyst. Substoichiometric combustion of hydrocarbons can disadvantageously lead to formation of soot. Soot formation may be avoided by using a specific burner design and through controlling the operating conditions of the ATR process. Soot is formed in the flame of an autothermal reactor within certain ranges of operating conditions. When the amount of steam relative to the other components passed to the ATR reaction is under a certain critical value, soot is formed in the reacting feed. The limiting amount of steam can be expressed as the critical steam to carbon ratio, calculated as the molar flow rate of steam to the molar flow rate of carbon in the hydrocarbon feed. The hydrocarbon feedstock can be in form of natural gas or another kind of hydrocarbon including LPG, butane, naphtha, etc. The molar flow rate of carbon is calculated as the molar flow rate of the hydrocarbon times the carbon content of the hydrocarbon. The design of the burner nozzles has influence on the critical steam to carbon ratio. One such burner useful in ATR is described in US Patent No. 5,496,170.

Examples of operating conditions, which do not result in soot formation, are summarized in a paper by Christensen and Primdahl (Hydrocarbon processing, March 1994, pages 39-46). The conditions disclosed in this paper are shown in Table 1. Due to heat loss from the relatively small pilot unit employed in the experiments of Christensen and Primdahl the adiabatic ATR exit temperature will be higher than the temperature given in Table 1.

**Table 1**

| Case No. | Oxygen to Carbon Ratio | H₂O/C | CO₂/C | Measured ATR Exit Temp. °C | Adiabatic ATR Exit Temp. °C |
|---|---|---|---|---|---|
| A | 0.60 | 1.43 | 0 | 950 | 1013 |
| B | 0.62 | 0.59 | 0 | 1065 | 1173 |
| C | 0.60 | 0.86 | 0 | 1000 | 1073 |
| D | 0.67 | 0.68 | 0.47 | 1018 | 1147 |
| E | 0.70 | 0.67 | 0.75 | 1030 | 1147 |
| F | 0.73 | 0.58 | 0.98 | 1028 | 1177 |

This means that if a large unit, from which the heat loss is negligible, is subjected to the exact same conditions, the ATR exit temperature will be the adiabatic ATR exit temperature.

Advantageously, the process is operated at low steam to carbon ratios, since a low ratio lowers the investment expenses for an ATR plant and reduces the necessary energy consumption in operating the plant. Additionally, a low steam to carbon ratio makes it possible to optimise the produced synthesis gas composition for production of CO-rich gases for e.g. methanol or dimethyl ether synthesis and Fisher-Tropsh processes.

The feed to the ATR is divided into two separate streams, which are send to the burner. One stream contains oxygen and steam. The other stream contains hydrocarbon and steam and optionally hydrogen and/or carbondioxide. The two streams are mixed downstream the burner and combustion takes place.

It has now been found that the critical steam to carbon ratio depends on the distribution of steam to the oxygen and hydrocarbon containing feed stream. When the amount of steam contained in the oxygen feed stream is reduced the critical steam to carbon ratio is reduced.

### DESCRIPTION OF THE INVENTION

Based on the above findings, this invention provides a process for the preparation of a hydrogen and carbonmonoxid rich gas comprising the step of partial oxidation of a hydrocarbon feedstock with an oxygen containing reactant stream in presence of steam, wherein the steam is present in the hydrocarbon feedstock in an amount higher than in the oxygen containing reactant stream.

The invention allows operation of the process at a lower steam to carbon ratio compared to the critical steam/carbon ratio at equal distribution of steam between the oxygen and the hydrocarbon containing streams. The distance to the critical steam to carbon ratio is thereby by the invention increased and the risk of soot formation in case of a change in operating conditions, e.g. in case of an upset in the feed supply, is reduced.

Below is the inventive process illustrated at a steam content in the oxygen containing stream down to an amount of 5%, but the process will be applicable also at lower steam concentrations.

### Example

The test unit employed consists of a system for providing the feeds to the ATR reactor, the ATR reactor itself and equipment for post treatment of the product gas.

The feed streams consist of natural gas, steam, oxygen, and hydrogen. All gases are compressed to operating pressure and preheated to operating temperature. Natural gas is desulphurized before entering the ATR reactor.

The feeds were combined into two streams and were send to the burner of the ATR. A first feed stream of natural gas, hydrogen, and steam was heated to 500°C. A second feed stream containing oxygen and steam was heated to 220°C.

In the ATR reactor, the substoichiometric combustion and a subsequent catalytic steam reforming and shift reactions were carried out. The inlet and exit gas compositions were analyzed by gaschromatography. The product gas was in equilibrium with respect to the reforming and shift reactions.

Downstream the ATR reactor, the process gas was cooled down and the majority of the steam content of the product gas condensed. Any soot formed during the above reaction will be captured in the condensate. The condensate was subjected to both gravimetric and spectrophotometric analysis.

The following tests were carried out to illustrate the influence of steam distribution on the critical steam to carbon ratios according to the invention. The hydrocarbon used was natural gas. The composition of the natural gas is summarized in Table 2.

**Table 2**

| Composition of Natural Gas | |
|---|---|
| Component | Mole Fraction % |
| N₂ | 0.45 |
| CO₂ | 1.20 |
| CH₄ | 95.36 |
| C₂ | 2.22 |
| C₃ | 0.45 |
| C₄ | 0.23 |
| C₅⁺ | 0.08 |

Each test was made by approaching the critical steam to carbon ratio from the steam rich side. The tests were initiated with a sufficiently high steam flow to ensure soot free conditions. The steam flow was then decreased stepwise by a steam to carbon ratio of approximately 0.03. The system was allowed to become stable after which the condensate was examined for soot content. If the condensate was still soot free, the next step was taken. The term "soot free conditions" refers to condition in which the soot formation is negligible. The soot amount formed at the critical steam to carbon ratio was approximately 3-5 ppm.

Table 3 shows the critical steam to carbon ratio at two different temperature levels and at varying steam distribution. The flow rates were in all below described tests 100 Nm³/h natural gas and 3 Nm³/h hydrogen. 100 Nm³/h natural gas correspond to a carbon flow rate of 103 Nm³/h. The oxygen flow rate was adjusted to obtain the desired operating temperature and varied in the range 58-61 Nm³/h.

Due to heat loss from the relatively small pilot unit the adiabatic ATR exit temperature will be higher than the temperature given in Table 3. This means that if a large unit, from which the heat loss is negligible, is subjected to exact the same conditions, the ATR exit temperature will be the adiabatic ATR exit temperature.

**Table 3**

| Critical Steam to Carbon Ratio as Function of Steam Distribution and Temperature. Pressure is 24.5 bar | | | | | | | |
|---|---|---|---|---|---|---|---|
| Test No. | O₂/C | Steam flow in oxygen containing feed stream | Steam concentration in oxygen containing feed stream | Steam flow in natural gas containing feed stream | Critical S/C | Gas temperature at ATR exit | Adiabatic exit temperature |
| | | Nm³/h | mole% | Nm³/h | | °C | °C |
| 1.1 | 0.59 | 25 | 29 | 67 | 0.89 | 970 | 1032 |
| 1.2 | 0.57 | 8 | 12 | 61 | 0.67 | 971 | 1022 |
| 1.3 | 0.56 | 3 | 6 | 61 | 0.62 | 971 | 1021 |
| 2.1 | 0.59 | 18 | 24 | 22 | 0.39 | 1032 | 1105 |
| 2.2 | 0.58 | 4 | 6 | 31 | 0.34 | 1030 | 1102 |

The composition of the product gas from the ATR reactor in the tests of Table 3 was measured by gaschromatography. Selected gas compositions are shown in Table 4. The gas composition is given as dry mole%, which is the mole composition of the gas components when steam is not included.

**Table 4**

| **Composition of Product Gas (dry Mole%) of the Tests of Table 3** | | | | | |
|---|---|---|---|---|---|
| Test Number | H₂ | N₂ | CO | CO₂ | CH₄ |
| | % | % | % | % | % |
| 1.1 | 64.6 | 0.3 | 25.8 | 7.9 | 1.4 |
| 1.2 | 64.2 | 0.3 | 27.0 | 6.5 | 2.0 |
| 2.1 | 64.1 | 0.2 | 29.9 | 4.7 | 1.1 |
| 2.2 | 63.4 | 0.2 | 30.7 | 4.3 | 1.4 |

The data in Table 3 clearly demonstrate the influence of the steam distribution on the critical steam to carbon ratio. The critical steam to carbon ratio is 44% higher in test number 1.1 than in test number 1.3. The steam concentration in the oxygen containing feed stream is 29% in test 1.1 and 6% in test 1.3. A similar but less pronounced influence is seen at higher temperature. The critical steam to carbon ratio is 15% higher in test number 2.1 than in test number 2.2, where the steam concentrations are 24% and 6% respectively in the oxygen containing stream.

## Claims

1. Process for the preparation of a hydrogen and carbonmonoxid rich gas by catalytic autothermal reforming including the step of partial oxidation of a hydrocarbon feedstock with an oxygen containing reactant stream in presence of steam, wherein the steam is present in the hydrocarbon feedstock in an amount higher than in the oxygen containing reactant stream.

2. Process according to claim 1, wherein less than 1/3 of the total amount of steam is introduced with the oxygen containing stream.

3. Process according to claim 1, wherein the amount of steam in the oxygen containing reactant stream is less than 12 vol%.
